# EUROPÄISCHE PATENTSCHRIFT

(11) **EP 3 392 078 B1**
(45) Veröffentlichungstag und Bekanntmachung des Hinweises auf die Patenterteilung: **08.09.2021**
(21) Anmeldenummer: 18165973.1
(22) Anmeldetag: 05.04.2018
(51) Int. Cl.: F16C 11/04, F16C 11/02, B60N 2/02, B60N 2/90, F16C 43/02

(54) **GELENKVORRICHTUNG, AUSSTATTUNGSVORRICHTUNG EINES FAHRZEUGINNENRAUMS UMFASSEND EINE GELENKVORRICHTUNG SOWIE EIN VERFAHREN ZUR MONTAGE DER GELENKVORRICHTUNG**
HINGE DEVICE, FITTING DEVICE FOR THE INTERIOR OF A MOTOR VEHICLE COMPRISING A HINGE DEVICE AND METHOD FOR FITTING THE HINGE DEVICE
DISPOSITIF D'ARTICULATION, DISPOSITIF D'AMÉNAGEMENT D'UN HABITACLE COMPRENANT UN DISPOSITIF D'ARTICULATION AINSI QUE PROCÉDÉ DE MONTAGE DU DISPOSITIF D'ARTICULATION

(30) Priorität: 21.04.2017 DE 102017003860
(43) Veröffentlichungstag der Anmeldung: 24.10.2018
(73) Patentinhaber: GRAMMER AG, 92289 Ursensollen (DE)
(72) Erfinder: Keller, Hubert, 92245 Kummersbruck (DE); Bär, Andreas, 92224 Amberg (DE)
(74) Vertreter: Roche, von Westernhagen & Ehresmann

(56) Entgegenhaltungen:
- FR-A1- 2 468 026
- FR-A1- 2 687 133

## Beschreibung

Die Erfindung betrifft gemäß einem ersten Aspekt der Erfindung ein Innenraumausstattungsteil mit einer Gelenkvorrichtung. Eine Gelenkvorrichtung ist im Sinne der Erfindung eine Baugruppe, umfassend mindestens zwei Teile, die mittels eines Gelenks derart miteinander verbunden sind, dass sie um eine Schwenkachse relativ zueinander schwenkbar sind.

Aus offenkundiger Vorbenutzung ist eine Gelenkvorrichtung bekannt, wobei ein erstes Teil mit einer Bohrung versehen ist. In der Bohrung sind zwei Stifte koaxial zu der Schwenkachse und axial bewegbar aufgenommen. Zwischen den Stiften ist eine Feder angeordnet. In einem zweiten Teil sind zwei Aussparungen miteinander fluchtend und derart voneinander beabstandet angeordnet, dass das erste Teil so zu dem zweiten Teil angeordnet werden kann, dass die Bohrung des ersten Teils mit den Aussparungen des zweiten Teils fluchtet und zwischen den Aussparungen positioniert ist.

Die Montage erfolgt, indem die beiden Stifte entgegen der Federkraft zusammengedrückt werden, so dass das erste Teil in der Montageposition angeordnet werden kann. Wenn sich das erste Teil in der Montageposition befindet, werden die Stifte losgelassen, wobei die Federkraft jeweils einen Teilbereich der Längserstreckung jedes Stiftes in die jeweilige Aussparung des zweiten Teils drückt. Die Stifte werden von der Feder gegen einen Anschlag der Bohrung belastet. Dieser ist z.B. derart angeordnet, dass sich die Stifte jeweils etwa zur Hälfte in die Bohrung des ersten Teils und zur Hälfte in die Aussparung des zweiten Teils erstrecken.

Die Gelenkvorrichtung war insofern verbesserungswürdig, als der Monteur nicht überprüfen konnte, ob der Stift tatsächlich von der Feder bis zu dem Anschlag in die Aussparung des zweiten Teils gedrückt wurde. Es bestand nämlich die Gefahr, dass der Stift verklemmte oder aufgrund von Passungsungenauigkeiten nicht bis zum Anschlag gedrückt wurde. Eine sichere Verbindung des ersten Teils mit dem zweiten Teil war dann nicht gewährleistet.

FR2687133 betrifft einen Behälter mit einem Deckel, wobei ein Gelenk zwischen dem Gelenk und dem Behälter Aussparungen in dem Behälter und in dem Deckel umfasst. Ein Gelenkachse ist zunächst in der Aussparung eines Teils aufgenommen und kann teilweise in die andere Aussparung verschoben und mittels eines Halteelements in der Endposition gesichert werden.

Es war Aufgabe der Erfindung, eine Gelenkvorrichtung zu schaffen, bei welcher sichergestellt ist, dass sich die Stifte nach erfolgter Montage in der vorgesehenen Position befinden.

Die Aufgabe wurde gelöst durch ein Innenraumausstattungsteil mit einer Gelenkvorrichtung mit den Merkmalen des Anspruchs 1.

Die Gelenkvorrichtung umfasst ein erstes Teil, welches relativ zu einem zweiten Teil um eine Schwenkachse schwenkbar ist. Bei der Vorrichtung kann es sich z.B. um ein Ausstattungsteil des Fahrzeuginnenraums handeln. Fahrzeug ist im Sinne der Erfindung ein Land-, Luft- oder Wasserfahrzeug. Die Gelenkvorrichtung umfasst wenigstens einen zu der Schwenkachse koaxialen Stift. Z.B. umfasst die Gelenkvorrichtung zwei zu der Schwenkachse koaxiale Stifte. Der Stift stellt die schwenkbare Verbindung zwischen dem ersten Teil und dem zweiten Teil her.

Der Stift ist in einer Endmontageposition mit einem ersten Längsbereich in einem Endbereich einer zu der Schwenkachse koaxialen Bohrung des ersten Teils angeordnet. Mit Längsbereich ist im Sinne der Erfindung ein Bereich des Stiftes gemeint, der sich entlang der Längsachse des Stiftes erstreckt. Ein zweiter Längsbereich des Stiftes ist in einer zu der Schwenkachse koaxialen Aussparung des zweiten Teils angeordnet.

Weist das Gelenk z.B. zwei Stifte auf, sind z.B. auch zwei Aussparungen vorgesehen. Die Bohrung ist in diesem Fall z.B. eine Durchgangsbohrung oder alternativ sind zwei Bohrungen in dem ersten Teil ausgebildet.

Der Stift ist in einer Vormontageposition in Bezug auf die Endmontageposition mit einer größeren Überdeckung in der Bohrung aufgenommen. Der Stift ist zwischen der Vormontageposition und der Endmontageposition bewegbar.

In dem Fall, dass die Vorrichtung lediglich einen bewegbaren Stift aufweist, können z.B. an dem ersten Teil erste Formschlussmittel fest angeordnet sein, die mit zweiten Formschlussmitteln des zweiten Teils derart in Eingriff bringbar sind, dass ein Schwenken des ersten Teils relativ zu dem zweiten Teil möglich ist. Z.B. können die ersten Formschlussmittel von einem an dem ersten Teil angeformten oder befestigten Zapfen oder Vorsprung gebildet sein, der mit einer Aussparung des zweiten Teils in Eingriff bringbar ist. Auch die umgekehrte Variante ist denkbar, wonach der Zapfen oder Vorsprung an dem zweiten Teil angeformt oder befestigt ist und die Aussparung an dem ersten Teil ausgebildet ist. Das erste Teil kann dann z.B. relativ zu dem zweiten Teil angeordnet werden, indem die ersten Formschlussmittel und die zweiten Formschlussmittel in Eingriff gebracht werden. Während der Stift sich in der Vormontageposition befindet wird dann die Bohrung mit der Aussparung fluchtend angeordnet.

Die Gelenkvorrichtung umfasst wenigstens ein Halteelement. Das Halteelement kann durch einen Schacht in einem Sitz angeordnet werden. Der Schacht mündet oder kreuzt z.B. die Bohrung oder die Aussparung. Das Halteelement wirkt mit dem Stift zusammen. Das Halteelement bewegt den Stift von der Vormontageposition in die Endmontageposition. In der Endmontageposition verhindert das Halteelement die Rückbewegung des Stiftes in die Vormontageposition und hält den Stift in der Endmontageposition, in welcher er mit einem Längsbereich in der Bohrung und mit einem Längsbereich in der Aussparung aufgenommen ist.

Mit der erfindungsgemäßen Vorrichtung ist es nicht möglich, dass sich der Stift in die Vormontageposition zurückbewegt. Mit anderen Worten wird jeder Stift sicher in der Endmontageposition gehalten. Eine sichere Verbindung zwischen dem ersten Teil und dem zweiten Teil ist gewährleistet. Der Stift kann außerdem in Bezug auf die Vorrichtung aus dem Stand der Technik eine größere Länge aufweisen, weil bei der Montage kein Raum für eine den Stift belastende Feder benötigt wird, wie es im Stand der Technik erforderlich gewesen ist.

Z.B. weist das Halteelement wenigstens eine Anlagefläche auf, die mit dem Stift zusammenwirkt. Das Halteelement weist z.B. eine erste Anlagefläche auf, die mit einem ersten Stift zusammenwirkt und eine zweite Anlagefläche auf, die mit einem zweiten Stift zusammenwirkt, um die Stifte zwischen der Vormontageposition und der Endmontageposition zu bewegen und um eine Rückbewegung des ersten Stiftes und des zweiten Stiftes aus der Endmontageposition in die Vormontageposition zu verhindern.

Die Vorrichtung umfasst z.B. wenigstens zwei Halteelemente und wenigstens zwei Schächte. Ein erstes Halteelement ist z.B. durch einen ersten Schacht in einen ersten Sitz und ein zweites Halteelement durch einen zweiten Schacht in einem zweiten Sitz bewegbar. Der Schacht kreuzt z.B. die Bohrung oder die Aussparung. Der Schacht kann also in dem ersten Teil und / oder in dem zweiten Teil ausgebildet sein.

Gemäß einer Ausführungsform ist die Anlagefläche derart schräg zu einer Einsteckrichtung des Halteelementes ausgebildet, dass die Einsteckkraft teilweise in eine Richtung parallel zu der Schwenkachse umgeleitet wird, um den Stift aus der Vormontageposition in die Endmontageposition zu bewegen. Schräg bedeutet im Sinne der Erfindung, dass die Anlagefläche einen Winkel zu der Einsteckrichtung aufweist. Der Winkel kann z.B. 45° betragen. Z.B. weist das Halteelement eine erste Anlagefläche und eine zweite Anlagefläche auf. Die Anlageflächen weisen z.B. den gleichen Winkel zu der Einsteckrichtung auf. Der Stift wird dann automatisch beim Bewegen des Halteelements in seinen Sitz von der Anlagefläche des Halteelementes in die Endmontageposition verlagert.

Die Anlagefläche und eine weitere Fläche des Halteelements sind z.B. pfeilförmig ausgebildet und bilden eine Spitze. Die weitere Fläche des Halteelements ist z.B. eine zweite Anlagefläche, die mit einem zweiten Stift zusammenwirkt. Alternativ kann die weitere Fläche mit einer Wand, z.B. einer Wand des Schachtes, zusammenwirken. Wenn die Stifte z.B. in der Vormontageposition sehr nah beieinander angeordnet sind oder in Kontakt stehen, ist es mit der Spitze möglich, das Halteelement zwischen die Stifte zu bewegen, so dass die Anlageflächen mit den Stiften in Kontakt geraten.

Z.B. ist der Schacht so ausgebildet, dass die Einsteckrichtung des Halteelements etwa rechtwinklig zu der Schwenkachse verläuft. Auf diese Weise kann die Einsteckkraft einfach auf den Stift umgelenkt werden und die Montage des Halteelements ist einfach durchführbar. Wenn die Vorrichtung zwei Stifte umfasst, kann die Einsteckkraft mit einfachen Mitteln gleichmäßig auf beide Stifte verteilt werden.

Die Vorrichtung umfasst eine Verriegelungsvorrichtung, wobei das Halteelement mit wenigstens einer Riegelformation versehen ist, die jeweils, insbesondere lösbar, in eine Gegenformation des ersten Teils oder des zweiten Teils eingreift, wenn das Halteelement verriegelt ist. Die Verriegelungsvorrichtung kann als Rastvorrichtung ausgebildet sein. Das Halteelement wird dann automatisch in seinem Sitz verriegelt, sobald es in seinem Sitz angeordnet ist. Die Riegelformation ist in Form wenigstens eines Federarms ausgebildet. Die Gegenformation kann z.B. eine Hinterschneidung sein, die eine Bewegung des Halteelements aus dem Sitz heraus verhindert, solange der Federarm mit der Hinterschneidung in Eingriff ist.

Einer Ausgestaltung der Erfindung gemäß ist die Anlagefläche federnd ausgebildet. In diesem Fall können kleine Fertigungsungenauigkeiten ausgeglichen werden. Z.B. weist das Halteelement zwei federnde Anlageflächen auf. In jedem Fall ist die federnde Anlagefläche aber derart ausgebildet, dass der Stift nicht über eine kritische Überdeckung hinaus aus der Aussparung bewegbar ist. Die federnde Anlagefläche kann den Stift spielfrei in der Endmontageposition halten. Der Stift kann sich dann nicht oder lediglich geringfügig axial bezüglich der Schwenkachse bewegen und dabei z.B. Geräusche verursachen. Radial zu der Schwenkachse kann ebenfalls eine engere Passung vorgesehen sein, weil der Stift nicht mit der Federkraft in die Endmontageposition bewegt werden muss. Auch ein radiales Spiel kann so vermieden werden. Die federnde Anlagefläche kann zugleich den Federarm bilden. Insbesondere bildet jede federnde Anlagefläche einen Federarm, der mit einer Gegenformation zusammenwirkt.

Der Federarm weist Formschlussmittel auf, die mit Formschlussmitteln eines Werkzeugs in Eingriff bringbar sind, um den Federarm und die Gegenformation außer Eingriff zu bringen und um das Halteelement aus dem Sitz zu lösen. Die Formschlussmittel können z.B. von Bohrungen gebildet sein, in welche Zapfen des Werkzeugs hineinbewegbar sind.

Der Stift der Vorrichtung ist z.B. kreiszylindrisch ausgebildet. Die Aussparung ist z.B. komplementär ausgebildet. Alternativ kann z.B. der Stift in einem ersten Längsbereich im Querschnitt mehreckig und in einem zweiten Längsbereich im Querschnitt zylindrisch ausgebildet sein, wobei die entsprechende Aufnahme, d.h. die Bohrung oder die Aussparung dann eine komplementäre Form aufweist. Mit dieser Ausführungsform wird sichergestellt, dass eine Relativbewegung zwischen dem zylindrisch geformten Längsbereich und der entsprechenden zylindrischen Aufnahme stattfindet.

Die Aussparung weist z.B. einen Anschlag für den Stift auf. Die Endmontageposition ist dann erreicht, wenn eine Anschlagfläche des Stiftes mit dem Anschlag in Kontakt gerät.

In der Endmontageposition ist der Stift z.B. etwa mit gleicher Überdeckung zu dem ersten Teil und dem zweiten Teil angeordnet. Gemäß einer alternativen Ausführung können sich die Überdeckungen mit dem ersten Teil und mit dem zweiten Teil aber auch voneinander unterscheiden.

In der Vormontageposition ist der Stift z.B. im Wesentlichen vollständig in der Bohrung oder in der Aussparung aufgenommen. Auf diese Weise kann der Bauraum gering gehalten werden.

Die Erfindung betrifft gemäß einem zweiten Aspekt auch ein Fahrzeugausstattungsteil, wie Kopfstütze, Armlehne oder Aufnahmefach mit Abdeckklappe umfassend eine Gelenkvorrichtung nach dem ersten Erfindungsaspekt. Bezüglich der Merkmale und Vorteile der Erfindung wird Bezug genommen auf den ersten Erfindungsaspekt.

Im Falle einer Kopfstütze kann z.B. das zweite Teil ein mittels Tragstangen an der Rückenlehne eines Fahrzeugsitzes gelagertes Basisteil sein. Das erste Teil ist z.B. ein Lenker, mit welchem ein Kopfanlageteil verstellbar, z.B. schwenkbar, zu dem Basisteil gelagert ist.

Im Falle einer Armlehne kann z.B. das zweite Teil ein fahrzeugfester Fuß oder eine Konsole sein und das erste Teil kann eine relativ zu dem Fuß bewegbare, insbesondere schwenkbare Armauflage sein.

Im Falle eines Aufnahmefachs kann das zweite Teil von einer fahrzeugfesten Verkleidung mit darin vorgesehenem Aufnahmefach sein. Das erste Teil kann von einer schwenkbaren Abdeckklappe oder Klappe zum Verschließen des Aufnahmefachs gebildet sein.

Gemäß einem dritten Aspekt betrifft die Erfindung ein Verfahren zur Montage einer Gelenkvorrichtung.

Ein solches Verfahren ist aus dem Stand der Technik bekannt und wurde bereits oben beschrieben.

Es war Aufgabe der Erfindung ein Verfahren zu schaffen, mit welchem die Vorrichtung einfach montierbar ist und mit welchem die Teile der Gelenkvorrichtung sicher verbindbar sind.

Die Aufgabe wurde gelöst durch ein Verfahren mit den Merkmalen des Anspruchs 12.

Zunächst wird in mindestens einer Bohrung eines ersten Teils und / oder in mindestens einer Aussparung eines zweiten Teils wenigstens ein Stift angeordnet. D.h., ein Stift wird z.B. in der Bohrung oder in der Aussparung angeordnet. Alternativ werden z.B. zwei Stifte in einer Durchgangsbohrung oder in zwei Bohrungen oder in zwei Aussparungen angeordnet. Alternativ könnte auch bei einem Bohrung / Aussparung-Paar ein erster Stift in der Bohrung und bei einem weiteren Bohrung / Aussparung-Paar ein zweiter Stift in der Aussparung angeordnet werden.

Danach wird das erste Teil derart relativ zu einem zweiten Teil positioniert, dass die mindestens eine Bohrung des ersten Teils koaxial zu der Schwenkachse angeordnet ist, die von der mindestens einen Aussparung des zweiten Teils gebildet ist. Z.B. wird die Bohrung des ersten Teils zwischen zwei miteinander fluchtenden Aussparungen des zweiten Teils angeordnet, derart, dass eine Längsachse der Bohrung koaxial zu einer Längsachse der Aussparungen ist. Die Bohrung ist in diesem Fall z.B. eine Durchgangsbohrung.

Anschließend wird der Stift aus einer Vormontageposition in eine Endmontageposition bewegt, wobei der Stift in der Vormontageposition bezüglich der Endmontageposition mit einer größeren Überdeckung in der Bohrung aufgenommen ist. In der Endmontageposition ist der Stift mit einem ersten Längsbereich in einem Endbereich der Bohrung und mit einem zweiten Längsbereich in der Aussparungen angeordnet, so dass das erste Teil relativ zu dem zweiten Teil um die Schwenkachse schwenkbar ist.

Erfindungsgemäß wird zur Verlagerung des Stiftes zwischen der Vormontageposition und der Endmontageposition und zur Sicherung des Stiftes in der Endmontageposition wenigstens ein Halteelement durch einen in die Bohrung mündenden oder diese kreuzenden Schacht in einen Sitz bewegt. Dabei bewegt das Halteelement den Stift aus der Vormontageposition in die Endmontageposition. Wenn die Vorrichtung zwei Stifte umfasst, werden bei der Bewegung des wenigstens einen Halteelements in seinen jeweiligen Sitz beide Stifte von der Vormontageposition in die Endmontageposition bewegt.

Mit diesen Merkmalen ist eine einfache Montage gewährleistet, weil der Stift während der Montage nicht mehr entgegen der Federkraft in der Bohrung gehalten werden muss. Die Positionierung des ersten Teils relativ zu dem zweiten Teil in der Vormontageposition wird vereinfacht, weil der Stift nicht entgegen einer Federkraft in der Bohrung oder in der Aussparung gehalten werden muss. Darüber hinaus kann mit dem Verfahren eine sichere Verbindung zwischen dem ersten Teil und dem zweiten Teil gewährleistet werden. Wenn nämlich das Halteteil sich in seinem Sitz befindet und der Stift in der Endmontageposition angeordnet ist, kann er sich nicht mehr in die Vormontageposition zurückbewegen.

Weitere Vorteile ergeben sich anhand eines in den Fig. schematisch dargestellten Ausführungsbeispiels. Es zeigen:
Fig. 1 eine perspektivische Ansicht der Gelenkvorrichtung,
Fig. 2 eine Frontansicht der Gelenkvorrichtung,
Fig. 3 eine Seitenansicht der Vorrichtung gemäß den Ansichtspfeilen III in Fig. 1 und Fig. 2,
Fig. 4 eine Schnittansicht der Vorrichtung in der Vormontageposition gemäß Schnittlinie IV - IV in Fig. 2,
Fig. 5 die Vorrichtung in Anlehnung an Fig. 2 wobei zur Herstellung der Gelenkverbindung ein Halteelement in einen Sitz des ersten Teils bewegt wird,
Fig. 6 die Vorrichtung in Anlehnung an Fig. 5 in einer Endmontageposition, wobei das Halteelement in dem Sitz des ersten Teils angeordnet ist.

Die Vorrichtung insgesamt ist in den Fig. mit dem Bezugszeichen 10 bezeichnet. Gleiche Bezugszeichen in den unterschiedlichen Fig. bezeichnen entsprechende Teile, auch wenn kleine Buchstaben nachgestellt oder weggelassen sind.

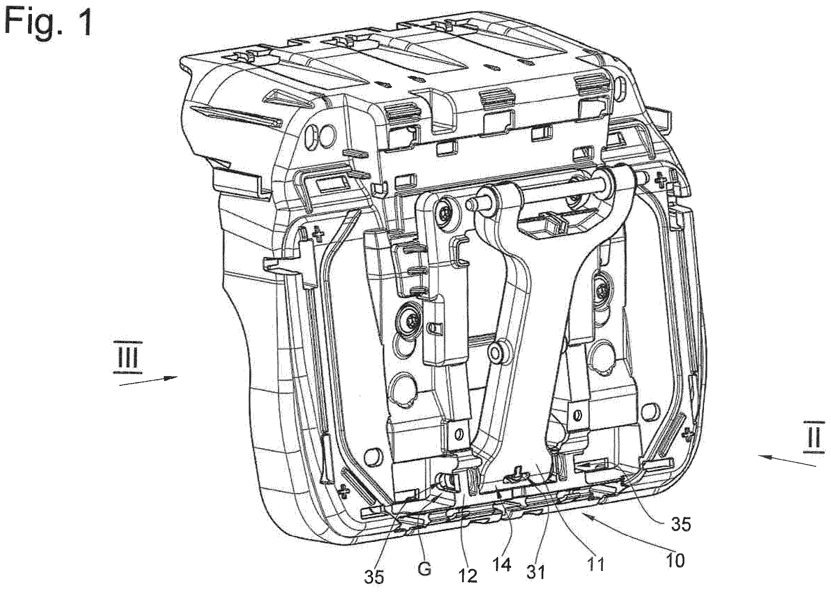

Die Vorrichtung 10 umfasst gemäß den Fig. 1 bis 3 und 6 ein erstes Teil 11, welches relativ zu einem zweiten Teil 12 um eine Schwenkachse a zwischen einer ersten Position und einer zweiten Position schwenkbar ist. Das erste Teil 11 und das zweite Teil 12 bilden ein Gelenk G.

Das erste Teil 11 ist mit einer durchgängigen Bohrung 13 versehen. Die Bohrung ist an einem Endbereich 14 des ersten Teils 11 ausgebildet.

Das zweite Teil 12 ist mit zwei voneinander beabstandeten Aussparungen 15a und 15b versehen, die koaxial zu der Schwenkachse a angeordnet sind. Die Aussparungen 15a und 15b weisen einen Abstand I voneinander auf. Jede Bohrung 15a und 15b ist mit einem axialen Anschlag 16 versehen. Zwischen den Aussparungen 15a und 15b ist der Endbereich 14 des ersten Teils 11 angeordnet. Die Bohrung 13 fluchtet mit den Aussparungen 15a und 15b und ist also ebenfalls koaxial zu der Schwenkachse a angeordnet.

Ein erster Stift 17a ist mit einem ersten Längsbereich in der Bohrung 13 und mit einem zweiten Längsbereich in der Aussparung 15a angeordnet. Außerdem ist ein zweiter Stift 17b mit einem ersten Bereich in der Bohrung 13 und mit einem zweiten Bereich in der Aussparung 15b angeordnet. Der Anschlag 16a verhindert eine weitere Bewegung des Stiftes 17a in Richtung y2 und der Anschlag 16b verhindert eine weitere Bewegung des Stiftes 17b in Richtung y1. Eine Stirnfläche 34 des Stiftes 17a wirkt mit dem Anschlag 16a und eine Stirnfläche 34 des Stiftes 17b wirkt mit dem Anschlag 16b zusammen.

Die Stifte 17a und 17b sind in dem vorliegenden Ausführungsbeispiel kreiszylindrisch ausgebildet. Die Aussparungen sind ebenfalls kreiszylindrisch ausgebildet. Mit den Stiften 17a und 17b wird eine schwenkbare Verbindung zwischen dem ersten Teil 11 und dem zweiten Teil 12 geschaffen.

Ein Halteelement 18 ist in einem Sitz 28 zwischen den Stiften 17a und 17b angeordnet. Ferner ist in dem ersten Teil 11 ein Schacht 31 mit einer Öffnung 30 ausgebildet, durch welchen das Halteelement 18 in Richtung x1 von außen in den Sitz 28 bewegbar ist. Der Schacht 28 kreuzt die Bohrung 13. Der Schacht 28 ist derart ausgebildet, dass die Einsteckrichtung x1 des Halteelements 18 etwa rechtwinklig zu der Schwenkachse a angeordnet ist.

Das Halteelement 18 weist Anlageflächen 19a und 19b auf, die ausgehend von einer Spitze 20 pfeilförmig ausgebildet sind. Die Anlagefläche 19a bildet mit einer Einsteckrichtung x1 einen Winkel α und die Anlagefläche 19b bildet mit der Einsteckrichtung x1 ebenfalls einen Winkel a. Die Anlageflächen 19a und 19b sind an federnden Armen 21a und 21b des Halteelements 18 ausgebildet. Das Halteelement 18 ist aus einem rückstellelastischen Material, im vorliegenden Ausführungsbeispiel aus Kunststoff, ausgebildet.

Zwischen den Armen 19a und 19b und einer Basis 22 des Halteelements 18 sind Ausnehmungen 23a und 23b ausgebildet. Der Arm 21a kann sich daher aus der dargestellten Position elastisch in Richtung y1 und der Arm 21b kann sich in Richtung y2 verformen. Jeder Arm 21a und 21b ist mit ersten Formschlussmitteln 24 versehen, die mit zweiten Formschlussmitteln 25 des ersten Teils 11 rastend zusammenwirken. Die ersten Formschlussmittel 24 sind im vorliegenden Ausführungsbeispiel von einer Riegelfläche 26 und die zweiten Formschlussmittel 25 sind von einer Wandfläche 27 der Bohrung 13 gebildet.

Wenn sich das Halteelement 18 in dem Sitz 28 befindet, bewegen sich die Arme 21a und 21b in Eingriff mit der Wandfläche 27, so dass eine Bewegung in Richtung x2 verhindert wird. Ferner liegen die Anlageflächen 19a und 19b derart an einer Laibung 29 einer Öffnung 30 des ersten Teils 11 an, dass eine Bewegung in Richtung x1 verhindert wird. Die Anlagefläche 19a erstreckt sich außerdem so quer zu der Bohrung 13, dass eine Bewegung des Stiftes 17a in Richtung y1 verhindert wird. Die Anlagefläche 19b erstreckt sich darüber hinaus so quer zu der Bohrung 13, dass eine Bewegung des Stiftes 17b in Richtung y2 verhindert wird.

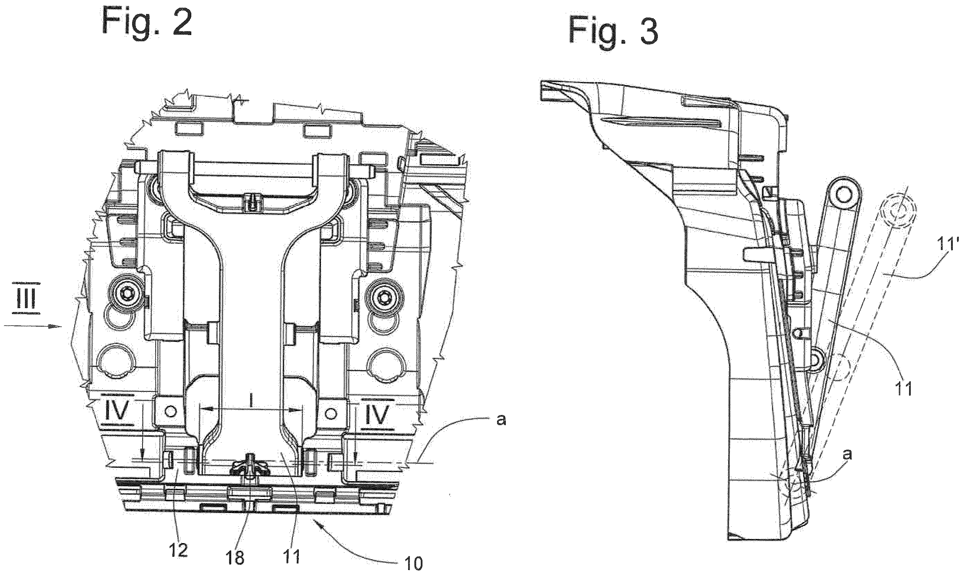

Auf diese Weise ist ein Gelenk G gebildet, welches ein Lösen des ersten Teils 11 von dem zweiten Teil 12 sicher verhindert. Das erste Teil 11 kann relativ zu dem zweiten Teil 12 in unterschiedlichen Schwenkstellungen anageordnet werden. In Fig. 3 ist das erste Teil mit durchgezogenen Linien in einer ersten Schwenkposition gezeigt und mit 11 bezeichnet sowie mit gestrichelten Linien in einer zweiten Schwenkposition gezeigt und mit 11' bezeichnet.

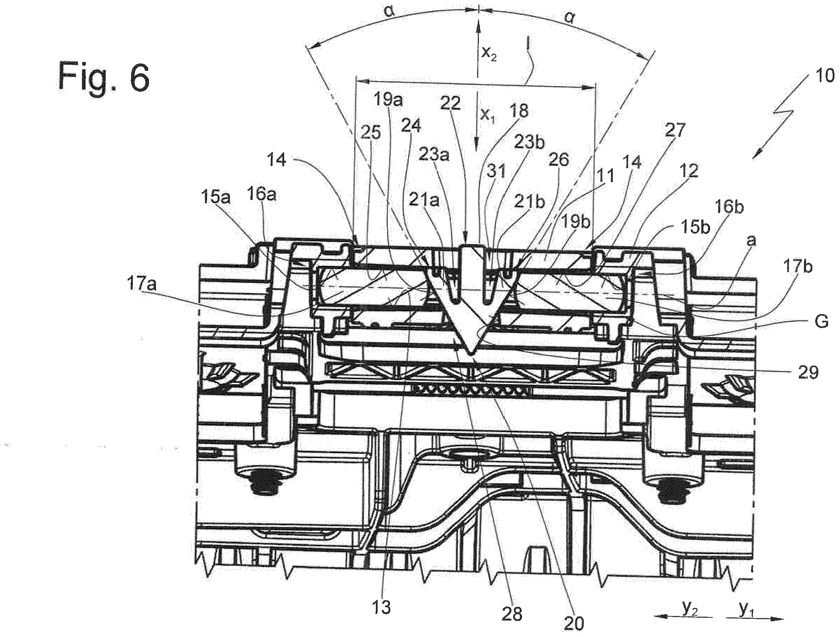

Wenn sich das Halteelement 18 in dem Sitz 28 befindet, ist sichergestellt, dass die Stifte 17a und 17b ausreichende Überdeckung mit dem ersten Teil 11 und mit dem zweiten Teil 12 haben. Auch eine elastische Verformung des Arms 21a in Richtung y1 (siehe Fig. 6) erlaubt es dem Stift 17a nicht, sich soweit in Richtung y1 zu bewegen, dass keine ausreichende Verbindung zwischen dem ersten Teil 11 und dem zweiten Teil 12 gewährleistet wäre. In gleicher Weise ist bei einer elastischen Verformung des Arms 21b in Richtung y2 gewährleistet, dass der Stift 17b mit ausreichender Länge in der Aussparung 15b angeordnet ist, um eine sichere Verbindung zwischen dem ersten Teil 11 und dem zweiten Teil 12 aufrechtzuerhalten.

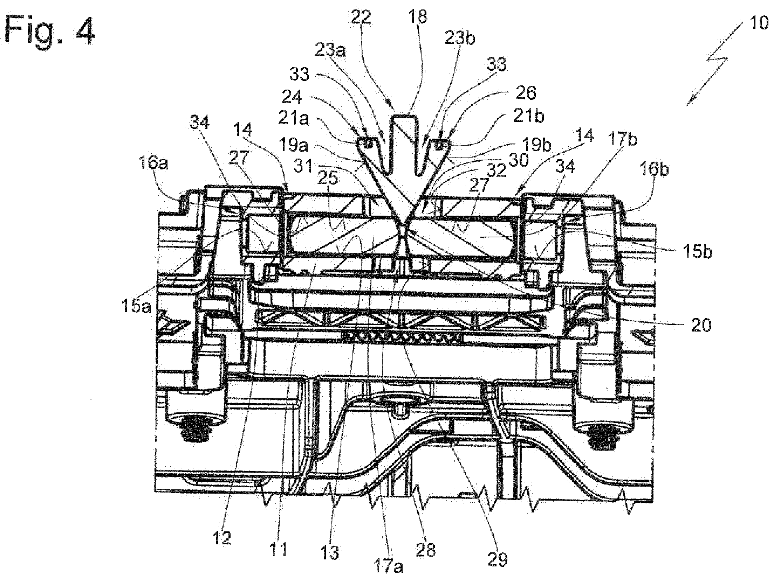

Nachfolgend wird die Montage der Vorrichtung beschrieben. Die Stifte 17a und 17b werden in der Bohrung 13 in einer Vormontageposition angeordnet (siehe Fig. 4). In der Vormontageposition sind die Stifte 17a und 17b z.B. vollständig in der Bohrung 13 aufgenommen. Die Bohrung 13 wird so zwischen die Aussparungen 15a und 15b gebracht, dass sie mit den Aussparungen fluchtet. An dem zweiten Teil 12 ist z.B. wenigstens ein Hilfsanschlag vorgesehen, wobei das erste Teil 11 automatisch in der richtigen Position angeordnet ist, wenn das erste Teil an dem Anschlag anliegt.

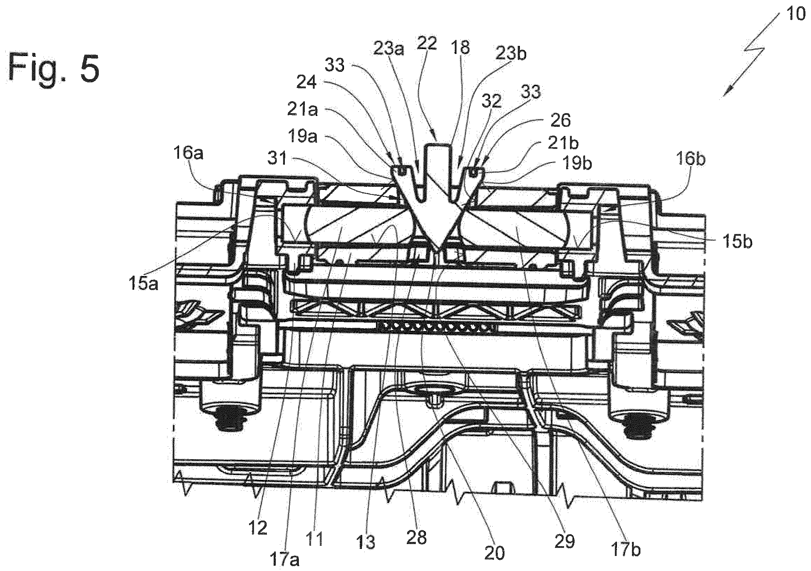

Danach wird das Halteelement 18 durch die Öffnung 30 in Richtung x1 in den Schacht 31 eingeführt, so dass die Spitze 20 zwischen die Stifte 17a und 17b greift (siehe Fig. 4). Bei weiter Bewegung des Halteelements 18 in Richtung x1 wird von der Anlagefläche 19a der Stift 17a in Richtung y2 und von der Anlagefläche 19b der Stift 17b in Richtung y1 bewegt (siehe Fig. 5). Freie Endbereiche der Arme 21a und 21b werden dabei von einer Innenfläche 32 des Schachtes 31 zu der Basis 22 hin verformt.

Wenn sich das Halteelement 18 in dem Sitz 28 befindet (siehe Fig. 6) können sich die Arme 21a und 21b von der Rückstellkraft veranlasst wieder in ihre Ursprungsform bewegen und hintergreifen dann die Wandfläche 27 derart, dass sich das Halteelement 18 nicht mehr in Richtung x2 bewegen kann. Die Riegelfläche 26 jedes Arms 21a und 21b liegt dann an der Wandfläche 27 an. Es liegt dann eine sichere gelenkige Verbindung zwischen dem ersten Teil 11 und dem zweiten Teil 12 vor.

Zum Lösen des Halteelements 18 greifen Vorsprünge eines nicht dargestellten Werkzeugs in Rücksprünge 33 des Halteelements 18. Die Rücksprünge sind z.B. von Bohrungen gebildet, in welche die Vorsprünge des Werkzeugs eingreifen. In der Basis 22 kann z.B. ein nicht dargestelltes Gewinde ausgebildet sein, mit welchem das Werkzeug verschraubt wird, um das Halteelement 18 in Richtung x2 aus dem Sitz 28 zu bewegen. Die Arme 21a und 21b werden dann in Richtung der Basis 22 bewegt und das Halteelement 18 wird in Richtung x2 aus dem Schacht 31 herausbewegt.

Anschließend werden die Stifte 17a und 17b so in die Bohrung 13 bewegt, dass sie ihre Überdeckung mit den Aussparungen 15a und 15b verlieren. Dafür sind Aussparungen 35 in dem ersten Teil 11 ausgebildet, die ein Bewegen des Stiftes 17a in Richtung y1 und ein Bewegen des Stiftes 17b in Richtung y2 ermöglichen. Das erste Teil 11 und das zweite Teil 12 können dann voneinander demontiert werden.

## Patentansprüche

1. Innenraumausstattungsteil eines Fahrzeuges mit einer Gelenkvorrichtung mit einem ersten Teil (11), welches relativ zu einem zweiten Teil (12) um eine Schwenkachse (a) schwenkbar ist, wobei das erste Teil (11) wenigstens eine Bohrung (13) und das zweite Teil (12) wenigstens eine Aussparung (15a, 15b) umfasst, wobei wenigstens ein zu der Schwenkachse (a) koaxialer Stift (17a, 17b) in einer Endmontageposition mit einem ersten Längsbereich in der Bohrung (13) und mit einem zweiten Längsbereich in der Aussparung (15a, 15b) angeordnet ist und der Stift (17a, 17b) zwischen einer Vormontageposition, in der der Stift (17a, 17b) in Bezug auf die Endmontageposition mit einer größeren Überdeckung in der Bohrung (13) oder in der Aussparung (15a, 15b) aufgenommen ist und der Endmontageposition bewegbar ist, wobei mindestens ein Halteelement (18) durch einen Schacht (31) derart in einem Sitz (28) angeordnet werden kann, dass der Stift (17a, 17b) von dem Halteelement (18) aus der Vormontageposition in die Endmontageposition bewegbar ist und dass das Halteelement (18) in der Endmontageposition so angeordnet ist, dass es eine Rückbewegung des Stiftes (17a, 17b) aus der Endmontageposition in die Vormontageposition verhindert, **dadurch gekennzeichnet, dass** das Halteelement mit wenigstens einer Riegelformation in Form eines Federarms versehen ist, die lösbar in eine Gegenformation des ersten Teils oder des zweiten Teils eingreift, wenn das Halteelement in dem Sitz angeordnet ist und dass der Federarm Formschlussmittel umfasst, die mit Formschlussmitteln eines Werkzeugs in Eingriff bringbar sind, um die Riegelformation und die Gegenformation außer Eingriff zu bringen.

2. Innenraumausstattungsteil eines Fahrzeuges nach Anspruch 1, **dadurch gekennzeichnet, dass** die Vorrichtung zwei Stifte (17a, 17b) umfasst, wobei jeder Stift (17a, 17b) in der Endmontageposition mit einem Längsbereich in der Bohrung (13) und mit einem anderen Längsbereich in der Aussparung aufgenommen ist.

3. Innenraumausstattungsteil eines Fahrzeuges nach einem der vorangehenden Ansprüche, **dadurch gekennzeichnet, dass** wenigstens zwei Schächte (31) und wenigstens zwei Halteelemente (18) vorgesehen sind, wobei ein erstes Halteelement durch einen ersten Schacht in einem ersten Sitz und ein zweites Halteelement durch einen zweiten Schacht in einem zweiten Sitz angeordnet werden kann.

4. Innenraumausstattungsteil eines Fahrzeuges nach einem der vorangehenden Ansprüche, **dadurch gekennzeichnet, dass** wenigstens eine Anlagefläche (19a, 19b) an dem Halteelement (18) ausgebildet ist, die mit dem Stift (17a, 17b) zusammenwirkt, wobei die Anlagefläche (19a, 19b) derart schräg zu einer Einsteckrichtung (x1) des Halteelementes (18) ausgebildet ist, dass ein Teil der Einsteckkraft in eine Richtung (y1, y2) parallel zu der Schwenkachse (a) umgeleitet wird, um den Stift (17a, 17b) aus der Vormontageposition in die Endmontageposition zu bewegen.

5. Innenraumausstattungsteil eines Fahrzeuges nach Anspruch 4, **dadurch gekennzeichnet, dass** die Anlagefläche (19a, 19b) und eine weitere Fläche des Halteelements pfeilförmig zueinander angeordnet sind und eine Spitze (20) bilden.

6. Innenraumausstattungsteil eines Fahrzeuges nach einem der vorangehenden Ansprüche, **dadurch gekennzeichnet, dass** wenigstens eine Anlagefläche (19a, 19b) an dem Halteelement (18) ausgebildet ist, die mit dem Stift (17a, 17b) zusammenwirkt, dass die Anlagefläche (19a, 19b) federnd ausgebildet ist.

7. Innenraumausstattungsteil eines Fahrzeuges nach einem der vorangehenden Ansprüche, **dadurch gekennzeichnet, dass** der Schacht derart ausgebildet ist, dass die Einsteckrichtung (x1) etwa rechtwinklig zu der Schwenkachse (a) gerichtet ist.

8. Innenraumausstattungsteil eines Fahrzeuges nach einem der vorangehenden Ansprüche, **dadurch gekennzeichnet, dass** eine Verriegelungsvorrichtung zur Verriegelung des Halteelements an dem ersten Teil vorgesehen ist, wobei das Halteelement (18) mit einer ersten Formschlussmitteln (24) versehen ist, die in zweite Formschlussmittel (25) des ersten Teils (11) oder der zweiten Teils (12) eingreift, wenn das Halteelement (18) in seinem Sitz (31) angeordnet ist.

9. Innenraumausstattungsteil eines Fahrzeuges nach einem der vorangehenden Ansprüche, **dadurch gekennzeichnet, dass** der Stift (17a, 17b) zylindrisch, insbesondere kreiszylindrisch ausgebildet ist.

10. Innenraumausstattungsteil eines Fahrzeuges nach einem der vorangehenden Ansprüche, **dadurch gekennzeichnet, dass** die Aussparung (15a, 15b) und / oder die Bohrung (13) einen Anschlag (16a, 16b) für den Stift (17a, 17b) aufweist.

11. Innenraumausstattungsteil eines Fahrzeuges, nach einem der vorangehenden Ansprüche, **dadurch gekennzeichnet, dass** das Innenraumausstattungsteil, eine Kopfstütze, eine Armlehne oder ein Aufnahmefach eines Fahrzeugs mit Abdeckklappe bildet.

12. Verfahren zur Montage und Demontage einer Gelenkvorrichtung eines Innenraumausstattungsteils eines Fahrzeugs, umfassend die Merkmale:
Einbringen von wenigstens einem Stift (17a, 17b) in mindestens eine Bohrung (13) eines ersten Teils (11) und / oder in mindestens eine Aussparung eines zweiten Teils,
positionieren des ersten Teils (11) derart relativ zu einem zweiten Teil (12), dass die Längsachse der Bohrung (13) koaxial zu der Aussparung (15a, 15b) angeordnet ist und mit dieser fluchtet,
Einbringen wenigstens eines Halteelements (18) durch mindestens einen Schacht (31) des ersten Teils (11) in einen Sitz (28), wobei das Halteelement (18) den Stift (17a, 17b) aus einer Vormontageposition in eine Endmontageposition bewegt, wobei der Stift (17a, 17b) in der Vormontageposition bezüglich der Endmontageposition mit einer größeren Überdeckung in der Bohrung (13) oder in der Aussparung (15a, 15b) aufgenommen ist und
in der Endmontageposition der Stift (17a, 17b) mit einem ersten Längsbereich in einem Endbereich der Bohrung (13) und mit einem zweiten Längsbereich in der Aussparung (15a, 15b) angeordnet ist, **dadurch gekennzeichnet, dass** das Halteelement mit wenigstens einer Riegelformation in Form eines Federarms versehen ist, die lösbar in eine Gegenformation des ersten Teils oder des zweiten Teils eingreift, wenn das Halteelement in dem Sitz angeordnet ist, wobei der Federarm Formschlussmittel umfasst, die mit Formschlussmitteln eines Werkzeugs in Eingriff bringbar sind, um die Riegelformation und die Gegenformation außer Eingriff zu bringen.

## Claims

1. Interior fitting part of a vehicle having a hinge device with a first part (11) which is pivotable about a pivot axis (a) relative to a second part (12), the first part (11) comprising at least one bore (13) and the second part (12) comprising at least one recess (15a, 15b), and at least one pin (17a, 17b) coaxial with the pivot axis (a) is disposed with a first longitudinal portion in the bore (13) and with a second longitudinal portion in the recess (15a, 15b) in a final assembly position, and the pin (17a, 17b) is movable between a pre-assembly position, in which the pin (17a, 17b) is accommodated with a bigger overlap in the bore (13) or in the recess (15a, 15b) than in the final assembly position, and the final assembly position, and at least one retaining element (18) may be positioned through a passage (31) in a seat (28) in such a way that the pin (17a, 17b) can be moved by the retaining element (18) from the pre-assembly position into the final assembly position and, in the final assembly position, the retaining element (18) is positioned in such a way as to prevent a return movement of the pin (17a, 17b) from the final assembly position into the pre-assembly position, **characterised in that** the retaining element is provided with at least one locking formation in the form of a resilient arm which releasably engages in a complementary formation of the first part or second part when the retaining element is positioned in the seat, and the resilient arm comprises form-fitting means which can be moved into engagement with form-fitting means of a tool in order to move the locking formation and complementary formation out of engagement.

2. Interior fitting part of a vehicle as claimed in claim 1, **characterised in that** the device comprises two pins (17a, 17b), each pin (17a, 17b) being accommodated with one longitudinal portion in the bore (13) and another longitudinal portion in the recess in the final assembly position.

3. Interior fitting part of a vehicle as claimed in any of the preceding claims, **characterised in that** at least two passages (31) and at least two retaining elements (18) are provided, and a first retaining element can be positioned through a first passage in a first seat and a second retaining element can be positioned through a second passage in a second seat.

4. Interior fitting part of a vehicle as claimed in any of the preceding claims, **characterised in that** at least one contact surface (19a, 19b) is provided on the retaining element (18) and co-operates with the pin (17a, 17b), the contact surface (19a, 19b) being disposed at an angle to an insertion direction (x1) of the retaining element (18) so that some of the insertion force is deflected in a direction (y1, y2) parallel with the pivot axis (a) in order to move the pin (17a, 17b) out of the pre-assembly position into the final assembly position.

5. Interior fitting part of a vehicle as claimed in claim 4, **characterised in that** the contact surface (19a, 19b) and another surface of the retaining element are positioned relative to one another to form an arrow shape and form a tip (20) .

6. Interior fitting part of a vehicle as claimed in any of the preceding claims, **characterised in that** at least one contact surface (19a, 19b) that co-operates with the pin (17a, 17b) is provided on the retaining element (18) and the contact surface (19a, 19b) is of a resilient design.

7. Interior fitting part of a vehicle as claimed in any of the preceding claims, **characterised in that** the passage is positioned so that the insertion direction (x1) is directed approximately at a right angle to the pivot axis (a) .

8. Interior fitting part of a vehicle as claimed in any of the preceding claims, **characterised in that** a locking device is provided for locking the retaining element on the first part, the retaining element (18) being provided with a first form-fitting means (24) which engages in second form-fitting means (25) of the first part (11) or second part (12) when the retaining element (18) is positioned in its seat (31) .

9. Interior fitting part of a vehicle as claimed in any of the preceding claims, **characterised in that** the pin (17a, 17b) is of a cylindrical, in particular circular cylindrical, design.

10. Interior fitting part of a vehicle as claimed in any of the preceding claims, **characterised in that** the recess (15a, 15b) and/or the bore (13) has a stop (16a, 16b) for the pin (17a, 17b).

11. Interior fitting part of a vehicle as claimed in any of the preceding claims, **characterised in that** the interior fitting part is a head rest, an arm rest or a storage compartment of a vehicle with a cover flap.

12. Method for assembling and dismantling a hinge device of an interior fitting part of a vehicle, comprising the features:
introducing at least one pin (17a, 17b) into at least one bore (13) of a first part (11) and/or into at least one recess of a second part,
positioning the first part (11) relative to a second part (12) so that the longitudinal axis of the bore (13) is disposed coaxially with the recess (15a, 15b) and is aligned therewith,
introducing at least one retaining element (18) through at least one passage (31) of the first part (11) into a seat (28), the retaining element (18) moving the pin (17a, 17b) out of a pre-assembly position into a final assembly position, the pin (17a, 17b) being accommodated with a bigger overlap in the bore (13) or in the recess (15a, 15b) in the pre-assembly position than in the final assembly position, and
in the final assembly position, the pin (17a, 17b) is disposed with a first longitudinal portion in an end region of the bore (13) and with a second longitudinal portion in the recess (15a, 15b), **characterised in that** the retaining element is provided with at least one locking formation in the form of a resilient arm which releasably engages in a complementary formation of the first part or second part when the retaining element is positioned in the seat, the resilient arm comprising form-fitting means which can be moved into engagement with form-fitting means of a tool in order to move the locking formation and complementary formation out of engagement.

## Revendications

1. Elément d'équipement d'habitacle d'un véhicule avec un dispositif d'articulation avec une première partie (11) qui peut pivoter par rapport à une deuxième partie (12) autour d'un axe de pivotement (a), dans lequel la première partie (11) comprend au moins un orifice (13) et la deuxième partie (12) au moins une cavité (15a, 15b), dans lequel au moins une broche (17a, 17b) coaxiale par rapport à l'axe de pivotement (a) est disposée, dans une position d'assemblage final, avec une première zone longitudinale dans l'orifice (13) et avec une deuxième zone longitudinale dans la cavité (15a, 15b) et la broche (17a, 17b) peut se déplacer entre une position de pré-assemblage, dans laquelle la broche (17a, 17b) est reçue dans l'orifice (13) ou dans la cavité (15a, 15b) avec un plus grand recouvrement que dans la position d'assemblage final, et la position d'assemblage final, dans lequel au moins un élément de maintien (18) peut être disposé à travers un conduit (31) dans un logement (28) de telle sorte que la broche (17a, 17b) peut être déplacée par l'élément de maintien de la position de pré-assemblage à la position d'assemblage final, l'élément de maintien (18) étant disposé dans la position d'assemblage final de sorte qu'il empêche un retour de la broche (17a, 17b) de la position d'assemblage final à la position de pré-assemblage, **caractérisé en ce que** l'élément de maintien est pourvu d'au moins une formation de verrouillage sous forme d'un bras de ressort qui s'engage de façon détachable dans une formation homologue de la première partie ou de la deuxième partie quand l'élément de maintien est disposé dans le logement, et que le bras de ressort comprend des moyens de liaison par complémentarité de forme qui peuvent être mis en prise avec des moyens de liaison par complémentarité de forme d'un outil pour mettre la formation de verrouillage et ma formation homologue hors de prise.

2. Elément d'équipement d'habitacle d'un véhicule selon la revendication 1, **caractérisé en ce que** le dispositif comprend deux broches (17a, 17b), chaque broche (17a, 17b) étant reçue, en position d'assemblage final, avec une zone longitudinale dans l'orifice (13) et une autre zone longitudinale dans la cavité.

3. Elément d'équipement d'habitacle d'un véhicule selon une des revendications précédentes, **caractérisé en ce qu'**au moins deux conduits (31) et au moins deux éléments de maintien (18) sont prévus, un premier élément de maintien pouvant être disposé à travers un premier conduit dans un premier logement et un deuxième élément de maintien à travers un deuxième conduit dans un deuxième logement.

4. Elément d'équipement d'habitacle d'un véhicule selon une des revendications précédentes, **caractérisé en ce que** sur l'élément de maintien (18) est formée au moins une surface d'appui (19a, 19b) qui interagit avec la broche (17a, 17b), la surface d'appui (19a, 19b) étant disposée en biais par rapport à une direction d'insertion (x1) de l'élément de maintien (18), de sorte qu'une partie de la force d'insertion est déviée dans une direction (y1, y2) parallèle à l'axe de pivotement (a) pour déplacer la broche (17a, 17b) de la position de pré-assemblage à la position d'assemblage final.

5. Elément d'équipement d'habitacle d'un véhicule selon la revendication 4, **caractérisé en ce que** la surface d'appui (19a, 19b) et une autre surface de l'élément de maintien sont disposées en forme de flèche l'une par rapport à l'autre et forment une pointe (20).

6. Elément d'équipement d'habitacle d'un véhicule selon une des revendications précédentes, **caractérisé en ce que** sur l'élément de maintien (18) est formée au moins une surface d'appui (19a, 19b) qui interagit avec la broche (17a, 17b), la surface d'appui (19a, 19b) étant configurée de façon élastique.

7. Elément d'équipement d'habitacle d'un véhicule selon une des revendications précédentes, **caractérisé en ce que** le conduit est configuré de sorte que la direction d'insertion (x1) est orientée sensiblement perpendiculairement à l'axe de pivotement (a).

8. Elément d'équipement d'habitacle d'un véhicule selon une des revendications précédentes, **caractérisé en ce qu'**un dispositif de verrouillage est prévu pour le verrouillage de l'élément de maintien sur la première partie, l'élément de maintien (18) étant doté d'un premier moyen de liaison par complémentarité de forme (24) qui pénètre dans un deuxième moyen de liaison par complémentarité de forme (25) de la première partie (11) ou de la deuxième partie (12) quand l'élément de maintien (18) est disposé dans son logement (31).

9. Elément d'équipement d'habitacle d'un véhicule selon une des revendications précédentes, **caractérisé en ce que** la broche (17a, 17b) est configurée en forme de cylindre, en particulier de cylindre circulaire.

10. Elément d'équipement d'habitacle d'un véhicule selon une des revendications précédentes, **caractérisé en ce que** la cavité (15a, 15b) et/ou l'orifice (13) présente une butée (16a, 16b) pour la broche (17a, 17b).

11. Elément d'équipement d'habitacle d'un véhicule selon une des revendications précédentes, **caractérisé en ce que** l'élément d'équipement d'habitacle forme une appuie-tête, un accoudoir ou un compartiment de rangement d'un véhicule avec un couvercle.

12. Procédé pour l'assemblage et le désassemblage d'un dispositif d'articulation d'un élément d'équipement d'habitacle d'un véhicule, comprenant les caractéristiques suivantes :
insertion d'au moins une broche (17a, 17b) dans au moins un orifice (13) d'une première partie (11) et/ou dans au moins une cavité d'une deuxième partie,
positionnement de la première partie (11) par rapport à une deuxième partie (12) de telle sorte que l'axe longitudinal de l'orifice (13) est disposé de façon coaxiale par rapport à la cavité (15a, 15b) et est aligné avec celle-ci,
insertion d'au moins un élément de maintien (18) à travers au moins une conduite (31) de la première partie (11) dans un logement (28), l'élément de maintien (18) déplaçant la broche (17a, 17b) d'une position de pré-assemblage à une position d'assemblage final, la broche (17a, 17b) étant reçue dans l'orifice (13) ou dans la cavité (15a, 15b) avec un plus grand recouvrement dans la position de pré-assemblage que dans la position d'assemblage final et
en position d'assemblage final, la broche (17a, 17b) étant disposée avec une première zone longitudinale dans une zone terminale de l'orifice (13) et avec une deuxième zone longitudinale dans la cavité (15a, 15b), **caractérisé en ce que** l'élément de maintien est pourvu d'au moins une formation de verrouillage sous forme d'un bras de ressort qui s'engage de façon détachable dans une formation homologue de la première partie ou de la deuxième partie quand l'élément de maintien est disposé dans le logement, le bras de ressort comprenant des moyens de liaison par complémentarité de forme qui peuvent être mis en prise avec des moyens de liaison par complémentarité de forme d'un outil pour mettre la formation de verrouillage et ma formation homologue hors de prise.
